Europäisches Patentamt

European Patent Office

Office européen des brevets

(19)

(11) Publication number: **0 011 053**
**B1**

# EUROPEAN PATENT SPECIFICATION

(12)

(45) Date of publication of patent specification: **07.09.83**

(21) Application number: **79830019.0**

(22) Date of filing: **20.06.79**

(51) Int. Cl.³: **G 06 K 19/02,**
**G 07 C 11/00**

(54) Method for obtaining a credit card having an anisotropic, uniaxial magnetization and credit card obtained thereby.

(30) Priority: **30.10.78 IT 5171178**

(43) Date of publication of application:
**14.05.80 Bulletin 80/10**

(45) Publication of the grant of the patent:
**07.09.83 Bulletin 83/36**

(84) Designated Contracting States:
**AT BE CH DE FR GB LU NL SE**

(56) References cited:
**DE - A - 1 474 906**
**DE - A - 2 530 121**
**DE - A - 2 748 574**
**DE - A - 2 811 560**

**Leon I. Maissel and Reinhard Glang, Handbook of Thin Film Technology, McGraw-Hill Book Comp., 1970, pp. 17-1 to 17-17, 17-32 to 17-44 17—44**

(73) Proprietor: **IPM - Industria Politecnica Meridionale**
**Via Rettifilo al Bravo 90/92**
**I-80022 Arzano (Napoli) (IT)**

(72) Inventor: **De Feo, Carlo**
**Via Posillipo 66**
**Napoli (IT)**

(74) Representative: **Fiammenghi, Carlo et al,**
**c/o Fiammenghi-Fiammenghi Via Quattro**
**Fontane, No. 31**
**I-00184 Roma (IT)**

Courier Press, Leamington Spa, England

## Method for obtaining a credit card having an anisotropic, uniaxial magnetization and credit card obtained thereby

The invention relates to a method for obtaining a credit card having an anisotropic uniaxial magnetization and to a credit card which assures a considerable degree of security against falsification, so that it can be used as credit means for the selective utilization of telephone sets, vendor slot machines, trolley bus, tramway, trains and for the super highway toll payment and as identification means, e.g. for drawing money at a bank, in the bodies needing an entrance security control or presence signalling and anywhere that entrance and exit stamping of personnel cards is requested.

Credit cards with magnetic zones representative of information are well known in order to perform reliably the above-mentioned tasks; cf DE—A1—1474906 and DE—A1—2530121. However, they have many disadvantages due to the poor stability of the information coded on the card and the great easiness of reproducing the same. The credit cards on which the information is magnetically recorded are unstable and unreliable since they can lose the recorded information if they are subjected to a strong temperature change or to dispersed magnetic fields or they casually come into contact with permanent, magnets. Furthermore once the information recorded thereon has been read, they easily can be reproduced with usual means. To this purpose it is sufficient to use an emulsified solution of iron powder and then to transfer the obtained information to a falsified card or like support by means of a usual magnetic recording apparatus. Also optical effect credit cards such as those cards on which a cryptographic information is printed can be falsified because they can be copied with the usual printing methods even if the cryptographic information is unknown. Furthermore they are subject to lose the peculiar optical properties because of wear during normal use.

It is also known to manufacture credit-cards bearing a permanently encoded information and having a substrate of non magnetic material, on which substrate regions of anisotropic ferromagnetic material are formed in the presence of a magnetic field (cf. DE—A 2748574 and US—A 3873975); these documents describe a method for obtaining a credit card where information is recorded in a magnetic material. This magnetic material is applied according to thick film procedures, i.e. magnetic acicular particles each already having uniaxial anisotropic characteristic are bound together and zones are formed by applying a magnetic field during the evaporation of the binder.

Among the associated disadvantages is that "thick film" techniques normally imply a multiple step process; furthermore, the thickness of the film thus obtainable ($10 \div 15 \mu$m), together with the physical properties of the acicular magnetic particles employable, lead to a high coercive force, therefore requiring strong fields to be applied to detect the information. The invention, as claimed, provides a method for obtaining a credit card which eliminates the drawbacks of the prior art with a sure, reliable and unalterable identification providing a degree of security against adaptation to falsification which is much greater than the prior art.

The invention solves the problem of obtaining a secure credit card in a simplified way as far as the magnetization is concerned. Moreover, the claimed use of "thin film" technology (known from the Handbook of Thin Film Technology, Leon I. Maissel and Reinhard Glang, McGraw-Hill Book Comp., 1970, pp. 17-1 to 17-17, 17-32 to 17-34) allows zones of differing thicknesses and axes of anisotropy to be obtained in a single step process; the application of zones with differing electromagnetic responses has the advantage of permitting a more complex coding because each parameter increases the decision content. The credit card is therefore harder to forge.

Furthermore the thickness (between 0,01 and 0,5 $\mu$m) and the process control permits magnetic films having a very low coercive force to be obtained, therefore requiring lower magnetic fields for reading the information.

The invention is based on the particular known characteristic that the hysteresis loop of some ferromagnetic materials such as the Fe-Ni-Co alloys have an uniaxial anisotropy. Accordingly it has been observed that certain alloys, if they are cooled at the presence of a magnetic field, for example, starting from a temperature higher than the Curie point, maintain at room temperature a magnetic anisotropy with optimal magnetic properties in the direction along which the magnetic field has been applied.

In order to better understand this phenomena it is useful to refer to the magnetism theory and to the existence in each ferromagnetic material of that considerably high molecular magnetic field which makes the material spontaneously magnetized to saturation in the absence of any external applied magnetic field, even if the material appears completely demagnetized to the observer. It is assumed in fact that each ferromagnetic material is divided in many little zones or domains, each of them magnetized to saturation in a predetermined direction that is related to the crystal structure of the material.

Particularly in iron, which has a crystal lattice formed by a body-centered cube, this direction coincides with the cube corners. Therefore, these directions in the absence of an external applied magnetic field are different and distributed at random in the various domains, whereby the material appears technically demagnetized to the observer since the outward effect of the multiple directions of domain orientiation is null.

By applying now a magnetic field to the material, a determined magnetization according to the field direction appears therein since the various domains modify their preferential magnetization directions as a single dipole and are aligned in the field direction.

Particularly if the material as above mentioned is cooled in the presence of a magnetic field starting from a temperature higher than the Curie point, the domains which are formed during the material cooling remain aligned in a preferential direction coinciding with that along which the magnetic field has been applied. Along this preferential direction anisotropic properties and rectangular hysteresis loops are obtained, while in a direction perpendicular thereto there are flat hysteresis loops, i.e. with minimal or almost null energy.

The present invention makes use of this known property of the ferromagnetic materials and provides a credit card consisting of a substrate or support of non-magnetic material and particularly of plastic or paper material upon which a thin layer of ferromagnetic material composed of a Fe-Ni-Co alloy is fixed e.g. by electrodeposition methods or evaporation of the alloy under hard vacuum. During the deposition a magnetic field tangential to the support plane is applied so as to obtain along this direction the desired uniaxial anisotropic properties. Particularly if this deposition of ferromagnetic material occurs as zones throughout the substrate, each of such zones will constitute a credit unit or bit available for the coding of the credit card. According to the invention, the information on the card is encoded by varying at least the parameters position, number and thickness as defined in claim 1.

In fact, a further encoding in the form of a binary digit "0" or "1" according to the direction of the applied magnetic field, i.e. according to the sign of the hysteresis loop magnetization intensity, could be additionally associated with the hysteresis loop of each zone that is detected along the direction or preferential axis along which the magnetic field has been applied. The number of such zones as well as the directions of the applied magnetic fields in an orthogonal cartesian axis system lying on the substrate plane, could be varied. During the identification process, the sensing of the binary digits could be performed by means of suitable sensing devices that carry out the scanning of the credit card surface along orthogonal directions and detect in one case a magnetization intensity with a certain positive or negative value, to which a logic "1" or "0" respectively will be associated, and in the other case an almost null hysteresis.

As a result, the falsification of the credit card would be very difficult since the magnetic response is very sensitive to the value of the parameters set during the deposition process.

In order to increase the falsification difficulties, according to the present invention, the ferromagnetic material is deposited on the credit card support in layers of different thickness so as to obtain magnetization intensities which are likewise different. Therefore, during the identification process a threshold comparator, that only accepts signals if they have a predetermined intensity, can be provided along with the sensing device scanning the credit card surface.

An advantage with respect to the magnetized credit card is that the readout of the anisotropic effect credit card is static, i.e. the credit card doesn't need any movement during the readout, which gives rise to easiness of readout means design.

Another advantage is the low price since the substrate can be composed of plastic or paper material and the single bit zones or memory cells can be continuously obtained in a single step process.

Finally, the bit zones or memory cells of deposited ferromagnetic material can be physically destroyed or removed by punching or piercing them or by varying locally the physical characteristics of the deposited material. Thus a credit card can be provided with scaled or diminishing value depending on the enjoyed service and the low price of this credit card with respect to its face value allows the suppression thereof when the credit is exhausted.

An embodiment of the present invention will now be described more in detail with reference to the annexed drawings, wherein:

Fig. 1 is a support substrate of the ferromagnetic material with a cartesian tern of reference axes;

Figure 2 is an anisotropic hysteresis loop sensed in the direction parallel to that of the applied magnetic field;

Fig. 3 is an anisotropic hysteresis loop, sensed in a direction perpendicular to that of the applied magnetic field;

Fig. 4 is a support substrate on any zones of which the ferromagnetic material has been deposited;

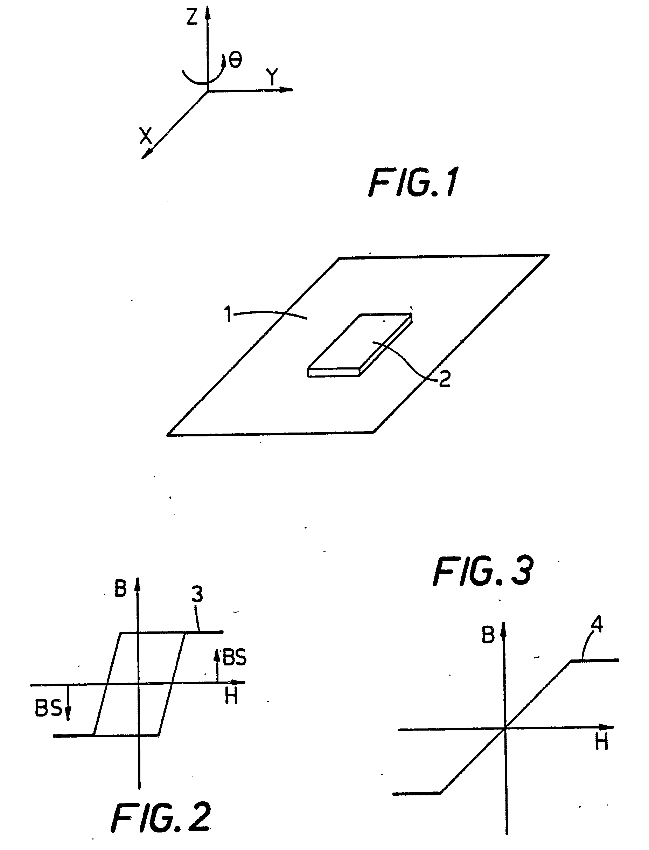

In Fig. 1 a substrate of non-magnetic material that forms the credit card support has been indicated with 1, on which a thin layer 2 of varying thickness consisting of a Fe-Ni-Co alloy is deposited, for example, by means of electrodeposition methods or evaporation of the alloy under hard vacuum.

During the deposition a magnetic field tangential to the plane of the support 1 is applied, for example, in the direction of the X-axis of the associated cartesian tern. This axis as above mentioned will be as a result the preferential axis along which good magnetic properties with rectangular hysteresis loops can be obtained, as shown in Fig. 2. On the contrary along the Y-axis, referred to resistant axis, flat hysteresis loops with a minimum of energy will be obtained, as shown in Fig. 3. It is evident that the magnetic field can be applied in the direction of Y-axis so that the latter becomes the preferential axis and the X-axis becomes the resistant one.

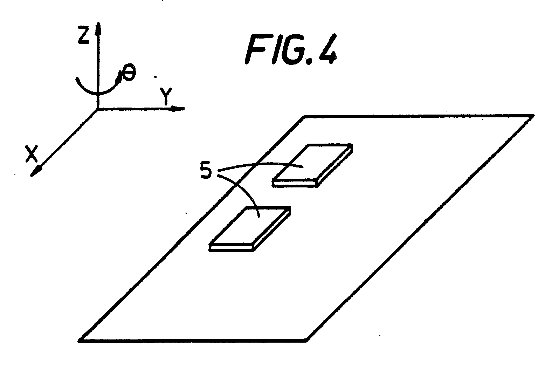

If, for example, as shown in Fig. 4, a series of zones are deposited according to the same continuous methods, each of them will be an available code unit or bit due to the hysteresis loop along the preferential axis. The number of these zones as well as of the code units or bits is varying depending on the application to which the credit card is designed.

Thus, if the binary digit "0" and "1" was associated with the two magnetization states, i.e. direct $+B_s$ and reverse $-B_s$, of the hysteresis loop along the preferential axis in Fig. 2, a binary code of identification associated to the bit zones or memory cells available on the credit card could be read by means of a scanning device or sensor. According to the present invention the identification can be performed by sensing only the physical presence of the memory cells on the credit card by means of a detection of the two hysteresis loops of Figs. 2 and 3 with a scanning along two orthogonal axes in conjunction with sensing which cells give a signal above a predetermined intensity. Thus the code is established during the construction of the credit card by varying the position, number and thickness of the memory cells on the credit card substrate.

Another embodiment of the present invention relates to the deposition of the memory cells so as to form, in addition to the above coding by position, number and thickness, preferential magnetization axes oriented with angles varying from cell to cell in the substrate plane, due to the variation of the direction of the magnetic field applied to each cell. The angular difference between preferential axes of continuous cells allows the combination of very large series of codes.

Finally, in case of a fractional application of the ferromagnetic material upon the substrate, it is to be intended that the form of the various memory cells can be as different as possible i.e. foil, plate or thin wire of any shape and dimensions depending on the particular scope of application.

## Claims

1. Method for obtaining a credit card bearing a permanently encoded information and having a substrate of non-magnetic material, on which substrate regions of anisotropic ferromagnetic material are formed in the presence of a magnetic field, characterized by the fact that to form the regions a ferromagnetic material alloy is heated above its Curie point and deposited on said substrate while applying the magnetic field, so that said ferromagnetic material alloy takes on a uniaxial anisotropy of its hysteresis loop (3, 4) along two orthogonal axes lying on the substrate plane so that along one of said axes or preferential axis the hysteresis loop is rectangular (3), while along the second of said axes or resistant axis, perpendicular to the first one, the hysteresis loop (4) is flat, further characterized by the fact that said encoded information is formed by varying the position and number of a plurality of individual spaced apart zones (2) of the credit card in which the ferromagnetic material alloy is deposited in thin layers (5) of differing thickness separated from each other and lying in the substrate plane of the credit card, and by choosing the thickness, and hence the magnetic intensity, of the individual zones.

2. Methods as set forth in claim 1, wherein during the deposition of said ferromagnetic material, the encoded information is further formed by means of magnetic fields applied to said zones, the directions of said fields differing from zone to zone.

3. Credit card made by the method of claim 1.

4. Credit card as set forth in claim 3, wherein said ferromagnetic material consists of a thin film of a Fe-Ni-Co alloy.

## Revendications

1. Procédé de réalisation d'une carte de crédit portant une information codée permanente et comprenant un substrat de matière non magnétique sur lequel des surfaces de matière anisotropique ferromagnétique sont réalisées dans un champ magnétique; caractérisé par le fait que pour former lesdites surfaces, on chauffe au-dessus de son point de Curie un alliage de matière ferromagnétique que l'on dépose sur ledit substrat sous application du champ magnétique de manière que la courbe d'hystérésis (3, 4) de l'alliage de matière ferromagnétique affecte une anisotropie uniaxiale suivant deux axes orthogonaux du plan de substrat de sorte que le long de l'un desdits axes ou axe préférentiel, la courbe d'hystérésis soit rectangulaire (3) tandis que le long du deuxième desdits axes ou axe résistant, perpendiculaire au premier, la courbe d'hystérésis est plate (4), également caractérisé par le fait que ladite information codée est réalisée en faisant varier la position et le nombre d'une pluralité de zones individuelles espacées (2) de la carte de crédit dans lesquelles l'alliage de matière ferromagnétique est déposé en couches minces (5) de différentes épaisseurs séparées les unes des autres et reposant sur le plan du substrat de la carte de crédit et en choisissant l'épaisseur, donc l'intensité magnétique des zones individuelles.

2. Procédé suivant la revendication 1, caractérisé en ce que pendant le dépôt de ladite matière ferromagnétique, l'information codée est également formée au moyen de champs magnétiques appliqués sur lesdites zones, leurs directions différant d'une zone à l'autre.

3. Carte de crédit réalisée selon le procédé suivant la revendication 1.

4. Carte de crédit suivant la revendication 3, caractérisée en ce que ladite matière ferromagnétique consiste en une fine pellicule d'un alliage Fe-Ni-Co.

**Patentansprüche**

1. Verfahren zur Herstellung einer eine permanent codierte Information tragenden Kreditkarte mit einem Substrat aus unmagnetischen Material, auf welchem Substrat Bereiche aus anisotropem ferromagnetischem Material in Gegenwart eines Magnetfeldes gebildet werden, dadurch gekennzeichnet, dass zur Bildung der Bereiche eine ferromagnetische Legierung über ihren Curiepunkt erhitzt und auf das Substrat unter Anlegen des Magnetfeldes aufgebracht wird, sodass die ferromagnetische Legierung eine einachsige Anistotropie ihrer Hystereseschleife (3, 4) entlang zweier in der Substratebene liegender orthogonaler Achsen, so dass entlang einer dieser Achsen oder Vorzugsachse die Hystereseschleife rechteckig (3) ist, wogegen entlang der zweiten dieser Achsen oder Widerstandsachse, die senkrecht zur ersten Achse verläuft, die Hystereseschleife (4) flach ist, dass die codierte Information durch Veränderung der Lage und Anzahl einer Mehrzahl einzelner im Abstand angeordneter Bereiche (2) der Kreditkarte geschaffen wird, in denen die ferromagnetische Legierung in dünnen Schichten (5) von unterschiedlicher Dicke aufgebracht wird, die voneinander getrennt sind und in der Substratebene der Kreditkarte liegen, und dass die Dicke und somit die magnetische Stärke der einzelnen Bereiche ausgewählt wird.

2. Verfahren nach Anspruch 1, dadurch gekennzeichnet, dass während des Aufbringens des ferromagnetischen Materiales die codierte Information zusätzlich mit Hilfe an die Bereiche angelegter Magnetfelder geschaffen wird, deren Richtungen von Bereich zu Bereich verschieden sind.

3. Kreditkarte, die gemäss dem Verfahren nach Anspruch 1 hergestellt ist.

4. Kreditkarte nach Anspruch 3, dadurch gekennzeichnet, dass das ferromagnetische Material aus einem dünnen Film einer Fe-Ni-Co Legierung besteht.

*FIG.1*

*FIG.3*

*FIG.2*

FIG.4